# EUROPÄISCHE PATENTSCHRIFT

(11) **EP 3 686 952 B1**
(45) Veröffentlichungstag und Bekanntmachung des Hinweises auf die Patenterteilung: **01.09.2021**
(21) Anmeldenummer: 19153406.4
(22) Anmeldetag: 23.01.2019
(51) Int. Cl.: H01M 50/249

(54) **GEHÄUSETEIL FÜR EINEN BATTERIETRÄGER UND VERFAHREN ZU DESSEN HERSTELLUNG**
HOUSING SECTION FOR A BATTERY HOLDER AND METHOD FOR ITS PRODUCTION
PARTIE BOÎTIER POUR UN SUPPORT DE BATTERIE ET SON PROCÉDÉ DE FABRICATION

(43) Veröffentlichungstag der Anmeldung: 29.07.2020
(73) Patentinhaber: voestalpine Metal Forming GmbH, 3500 Krems an der Donau (AT)
(72) Erfinder: WIEMANN, Marcus, 49324 Melle (DE); CANALINI, Claudio, 73312 Geislingen (DE)
(74) Vertreter: Jell, Friedrich

(56) Entgegenhaltungen:
- WO-A1-00/38863
- DE-A1-102011 052 513
- DE-A1-102016 103 411

## Beschreibung

Die Erfindung betrifft ein Verfahren zur Herstellung eines Gehäuseteils und ein Gehäuseteil, insbesondere Gehäuseboden oder Gehäusedeckel, für einen Batterieträger, wobei das einteilige Gehäuseteil eine erste Decklage aus wenigstens einem ersten Metallblech, eine zweite Decklage aus wenigstens einem zweiten Metallblech, eine Sicken aufweisende Zwischenlage aus wenigstens einem dritten Metallblech und Fluidkanäle zwischen der Zwischenlage und der ersten Decklage aufweist, wobei die Zwischenlage mit der ersten Decklage stoffschlüssig verbunden ist.

Zur Temperierung von Batteriezellen ist aus der EP2631966B1 ein Batterieträger mit einem Gehäuse bekannt, bei dem der Gehäuseboden im "Sandwichaufbau" als einteiliges Gehäuseteil eine zwischen erster und zweiten Decklage des Gehäuses eingebettete Rohrleitung aufweist, die Fluidkanäle ausbildet. Mechanische Stabilität verleiht diesem Gehäuseteil eine Zwischenlage mit eingeprägten Sicken, die an die erste und zweite Decklage anschließt und mit diesen stoffschlüssig durch Kleben verbunden ist. In den Sicken verläuft die Rohrleitung, welche über zusätzliche Wärmeleiter mit einer Decklage thermisch gekoppelt ist, um den Wärmewiderstand zwischen Rohrleitung und Decklage zu minimieren. Eine derartige Konstruktion ist jedoch vergleichswese komplex und bedarf eines vergleichsweise aufwendigen Herstellungsverfahrens, um die geforderte indirekte Wärmeübertragungsleistung reproduzierbar zu ermöglichen.

Die Erfindung hat sich daher ausgehend vom eingangs geschilderten Stand der Technik die Aufgabe gestellt, das Herstellungsverfahren des Gehäuseteils mit den Fluidkanälen zu vereinfachen, um eine geforderte indirekte Wärmeübertragungsleistung - reproduzierbar - herstellen zu können.

Die Erfindung löst die gestellte Aufgabe hinsichtlich des Verfahrens durch die Merkmale des Anspruchs 1.

Indem die Zwischenlage an die erste Decklage angelegt wird, können sich zwischen der Zwischenlage, insbesondere zwischen den Sicken der Zwischenlage, und der ersten Decklage Fluidkanäle ausbilden und zwar mit hoher Reproduzierbarkeit.
Wird das Metallschaum-Vormaterials zwischen der Zwischenlage und der zweiten Decklage vorgesehen, kann durch Aufschäumen des Metallschaum-Vormaterials eine stoffschlüssige Verbindung zwischen Zwischenlage und zweiter Decklage besonders reproduzierbar hergestellt werden.
Das stoffschlüssige Verbinden zu einem einteiligen Gehäuseteil, umfassend ein Aufschäumen des Metallschaum-Vormaterials, kann in einem Verfahrensschritt oder durch mehrere Verfahrensschritte erfolgen.
Erfolgt das Aufschäumen beim stoffschlüssigen Verbinden von Zwischenlage und der ersten Decklage, kann das aufschäumende Metallschaum-Vormaterial dieses stoffschlüssige Verbinden von Zwischenlage und erster Decklage unterstützen und eine standfeste Verbindung reproduzierbar ermöglichen. Zudem ist das Verfahren vergleichsweise einfach durchführbar, was wiederum die Handhabung erleichtert.
Das stoffschlüssige Verbinden zu einem einteiligen Gehäuseteil kann auch ein Aufschäumen des Metallschaum-Vormaterials für ein stoffschlüssiges Verbinden von Zwischenlage und zweiter Decklage in einem ersten Schritt und ein stoffschlüssiges Verbinden von Zwischenlage an erster Decklage, beispielsweise durch Löten, in einem weiteren Schritt umfassten.

Umfasst das stoffschlüssige Verbinden zu einem einteiligen Gehäuseteil ein Verlöten der erste Decklage mit der Zwischenlage, ist das einteilige Gehäuseteil vergleichsweise einfach herstellbar. Unter anderem verkürzt dies die Taktzeit zur Herstellung des Gehäuseteils - was die Effizienz des Herstellverfahren weiter steigern kann. Beispielsweise kann eine Hartlötverbindung Zwischenlage und erste Decklage stoffschlüssig miteinander verbinden, wenn Zwischenlage und Decklage je eine Aluminiumlegierung aufweisen.

Beispielsweise kann eine Weichlötverbindung Zwischenlage und erste Decklage stoffschlüssig miteinander verbinden, wenn Zwischenlage und Decklage je eine Stahllegierung aufweisen.

Die Herstellung kann weiter erleichtert werden, wenn die erste Decklage und/oder die Zwischenlage eine Lotschicht, insbesondere Lotplattierung, aufweist.

Vorstehend genannter Vorteil ist besonders einfach erreichbar, wenn das Metallschaum-Vormaterial beim Löten aufschäumt. Das stoffschlüssige Verbinden zu einem Gehäuseteil kann derart in einem Schritt erfolgen.

Werden die Sicken, insbesondere Trapezsicken, in das Metallblech eingeprägt, können diese hohen Drücken vom aufschäumenden Metallschaum standhalten. Eine formgenaue Herstellung des Gehäuseteils wird dadurch möglich - was die Reproduzierbarkeit des Verfahrens weiter erhöht.

Die Handhabung im Verfahren kann sich weiter erleichtern, wenn das Metallschaum-Vormaterial eine Blatt- oder Streifenform aufweist.

Ein stoffschlüssiges Verbinden der Teile zum einteiligen Gehäuseteil kann sich erleichtern, wenn das erste und/oder dritte Metallblech eine Aluminiumlegierung, insbesondere auf Al-Mn-Basis oder Al-Mg-Si-Basis, beispielsweise eine EN AW-3572, EN AW-6060 oder EN AW-6063 Aluminiumlegierung, oder eine Stahllegierung, insbesondere HSLA-Stahl oder CP-Stahl, beispielsweise HSLA460 oder CP1000, aufweisen, und/oder das zweite Metallblech eine Aluminiumlegierung, insbesondere auf Al-Mg-Si-Basis oder Al-Mg-Basis, beispielsweise eine EN AW-6082 Aluminiumlegierung im Zustand T4 oder eine EN AW-5005 Aluminiumlegierung, oder eine Stahllegierung, insbesondere HSLA-Stahl oder CP-Stahl, beispielsweise HSLA460 oder CP1000, aufweist, und/oder der Metallschaum eine Aluminiumbasis, insbesondere Al-Si-Basis, oder eine Zinkbasis, insbesondere Zn-Al-Basis, aufweist, und/oder das Lot der Lötverbindung eine Aluminiumlegierung, insbesondere auf Al-Si-Basis, beispielsweise eine EN AW-4343 oder EN AW-4433 Aluminiumlegierung, oder eine Zinnlegierung, insbesondere auf Sn-Cu-Basis oder Sn-Ag-Basis, beispielsweise A653 oder A644, aufweist.

Unter HSLA-Stähle (High Strength-Low Alloy) wird bekanntermaßen ein mikrolegierter Stahl mit beispielsweise einer Zugfestigkeit Rₘ > 750 MPa verstanden. Unter CP-Stahl wird bekanntermaßen ein Complexphasenstahl mit beispielsweise einer Zugfestigkeitswert von ≥ 800 MPa verstanden.

Die Handhabung des Verfahrens kann sich weiter erleichtern, wenn die Lotschicht und das Metallschaum-Vormaterial je eine Aluminiumlegierung aufweisen, deren Basis gleich ist, insbesondere eine Aluminiumlegierung mit Al-Si-Basis aufweisen.

In den Figuren ist beispielsweise der Erfindungsgegenstand anhand mehrerer Ausführungsvarianten näher dargestellt. Es zeigen
- Fig. 1: eine seitliche Schnittansicht auf ein Gehäuseteil eines Gehäuses eines Batte-rieträgers,
- Fig. 2: eine Detailansicht der Fig. 1 und
- Fig. 3a, 3b: schematische Darstellungen zu einem Verfahren zur Herstellung eines Gehäuseteils nach Fig. 1.

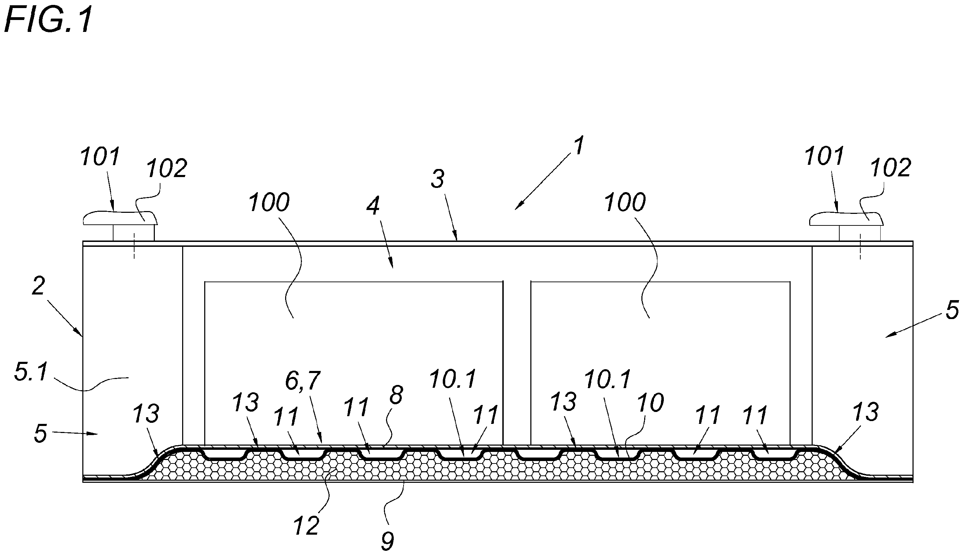

Nach Fig. 1 ist beispielsweise von einem Batterieträger 1, der an ein Kraftfahrzeug 101 montiert - und zwar beispielsweise unterhalb des Karosseriebodens 102 angeordnet.

Das Gehäuse 2 weist einen Gehäusedeckel 3 und ein Gehäuseunterteil 4 auf, welches wannenförmige Gehäuseunterteil 4 der Aufnahme von Batteriemodulen 100 bzw. Batteriezellen dient. Das Gehäuseunterteil 4 gliedert sich im Wesentlichen aus Seitenwänden 5, welche von einem geschlossenen, rechteckigen Hohlprofil 5.1 gebildet werden, und einen daran dicht anschließenden Gehäuseboden 6.

Der Gehäuseboden 6 ist als einteiliges Gehäuseteil 7, nämlich als Sandwichverbund, ausgeführt. So weist dieses Gehäuseteil 7 mehrere fest miteinander verbundene Schichten auf, nämlich eine erste Decklage 8 aus einem ersten Metallblech, eine zweite Decklage 9 aus einem zweiten Metallblech und eine Zwischenlage 10 aus einem dritten Metallblech. Erste und zweite Decklage 8, 9 bilden den Mantel des Gehäuseteils 7.

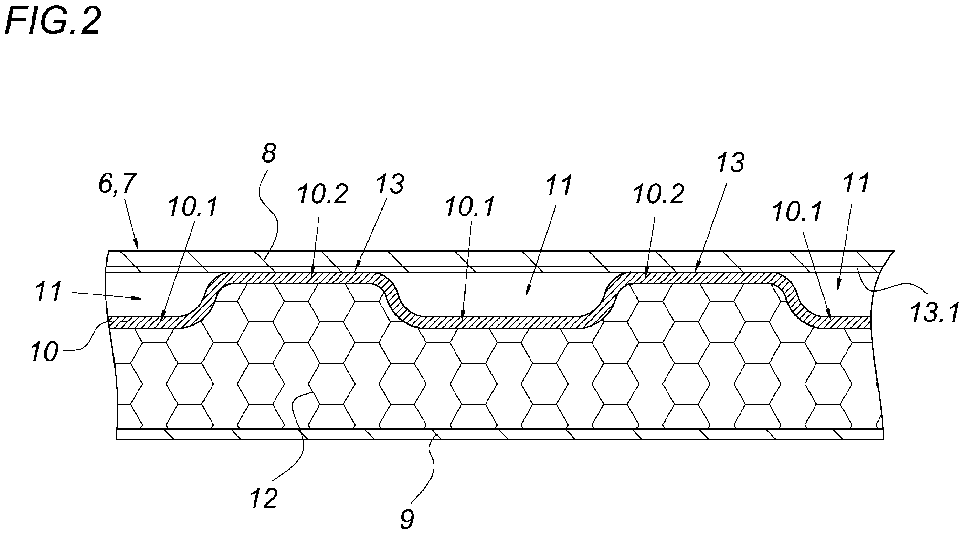

Die Zwischenlage 10 ist mit Sicken 10.1 (im Ausführungsbeispiel aufweisend Sickenboden und Sickenwänden) versehen. Die Sicken 10.1 verlaufen nebeneinander über die Zwischenlage 10. Zudem ist die Zwischenlage 10 an ihren Stegen 10.2 zwischen den Sicken 10.1 mit der ersten Decklage 8 stoffschlüssig verbunden - wie dies im Detail in Fig. 2 erkennbar ist.
Zudem sind im Gehäuseteil 7 Fluidkanäle 11 vorgesehen, welche sich zwischen der Zwischenlage 10 und der ersten Decklage 8 befinden. Damit können die Batteriemodule 100 bzw. Batteriezellen, die vorzugsweise auf der ersten Decklage 8 aufstehen, temperiert werden.

Erfindungsgemäß bilden die Zwischenlage 10, nämlich die Sicken 10.1 der Zwischenlage 10, und die erste Decklage 8 die Fluidkanäle 11 aus, was zusätzliche Rohrleitungen im Gehäuseteil 7 bzw. Gehäuseboden 6 - wie diese im Stand der Technik erforderlich sind - vermeidet. Zudem ermöglichen diese Fluidkanäle 11 eine hohe indirekte Wärmeübertragungsleistung zur Temperierung der Batteriemodule 100 bzw. Batteriezellen, da die erste Decklage 8 direkt an die Fluidkanäle 11 angegrenzt. Diese Fluidkanäle 11 zeichnen sich zudem auch durch besonders hohe Standfestigkeit hinsichtlich Leckage aus - und zwar auch bei hohen mechanischen Belastungen auf das Gehäuse 2, beispielsweise bei dessen Verwindungen, weil zwischen der Zwischenlage 10 und der zweiten Decklage 9 ein, diese stoffschlüssig miteinander verbindender Metallschaum 12 vorgesehen ist, der nicht nur die Fluidkanäle 11 mechanisch stabilisiert, sondern auch eine Dichtfunktion ausüben kann. Dies vor allem auch dann, wenn es sich um einen geschlossenporigen Metallschaum 12 handelt. Der Metallschaum 12 wird zudem von der Zwischenlage 10 und der zweiten Decklage 9 gekapselt, was beispielsweise die Korrosionsfestigkeit der Gehäuseteils 7 erhöhen kann.

Eine Lötverbindung 13 verbindet zudem die Zwischenlage 10 und erste Decklage 8 stoffschlüssig miteinander, was die Leckagefreiheit und Steifigkeit des Gehäuseteils 7 deutlich erhöht.

Das Lot 13.1 der Lötverbindung 13 weist ein erstes Schmelzintervall, der Metallschaum 12 ein zweites Schmelzintervall auf, wobei sich erstes und zweites Schmelzintervall zumindest bereichsweise überlappen können, um auch nachträglich durch ein Erwärmen im Überlappungsbereich der Schmelzintervalle eventuell aufgegangene stoffschlüssige Verbindungen zu schließen und damit das Gehäuse instand zu setzen. Dies ist insbesondere dann von Vorteil, wenn das Lot 13.1 und der Metallschaum 12 eine gleiche Aluminiumlegierungsbasis, insbesondere Al-Si-Basis, aufweisen.

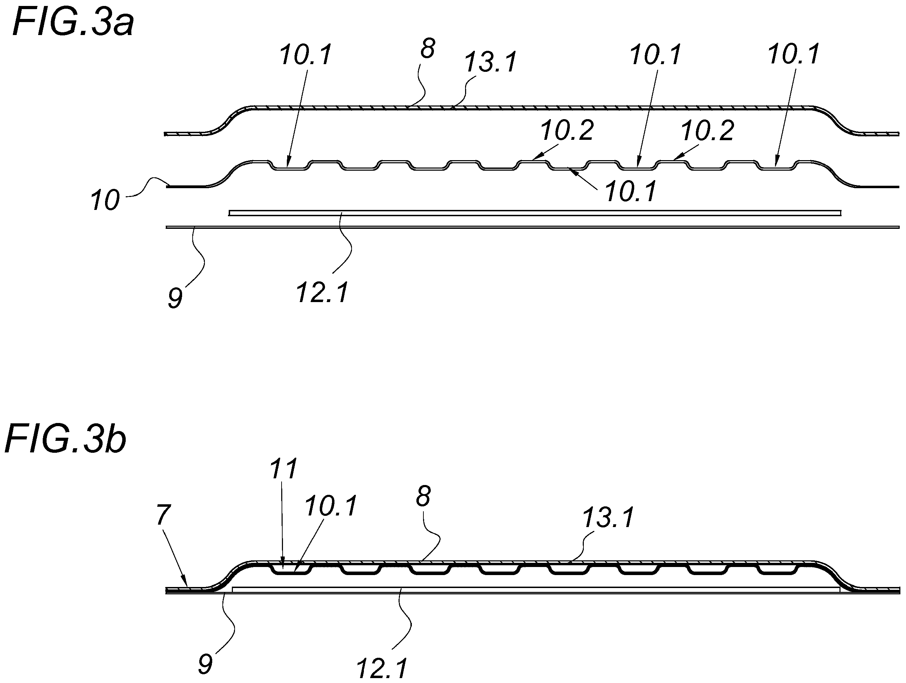

Der erfindungsgemäße Gehäuseteil 7 kann reproduzierbar durch Verfahrensschritte in folgender Reihenfolge nach einem ersten Ausführungsbeispiel hergestellt werden:
1. Bereitstellen einer ersten Decklage 8 aus einem ersten lotplattieren Metallblech, nämlich ein Metallblech aus einer Aluminiumlegierung auf Al-Mn-Basis, nämlich vom Typ EN AW-3572, als Kernschicht und einer Lot-Plattierschicht aus einer Aluminiumlegierung auf Al-Si-Basis, nämlich vom Type EN AW-4343;
   Bereitstellen einer zweiten Decklage 9 aus einem zweiten Metallblech, nämlich ein Metallblech aus einer Aluminiumlegierung auf Al-Mg-Si-Basis, nämlich vom Typ EN AW-6082 im Zustand T4;
   Bereitstellen einer Zwischenlage 10 aus einem dritten lotplattieren Metallblech, nämlich ein Metallblech mit einer Aluminiumlegierung auf Al-Mn-Basis, nämlich vom Typ EN AW-3572, als Kernschicht und einer Lot-Plattierschicht aus einer Aluminiumlegierung auf Al-Si-Basis, nämlich vom Type EN AW-4343; Die bereitgestellte Zwischenlage 10 weist durch Blechumformen eingebrachte Sicken 10.1, nämlich Trapezsicken auf;
   Bereitstellen eines festen Metallschaum-Vormaterials 12.1, das aus einem Metallpulver aus einer Aluminiumlegierung auf Al-Si-Basis, nämlich vom Typ AlSi₁₀Mg, und einem Treibmittel, nämlich TiH₂, gemischt und anschließend kompaktiert in Streifenform vorliegt;
   Die bereitgestellten Teile 8, 9, 10, 12.1 des Gehäuseteils 7 sind in der Fig. 3a ersichtlich.
2. Vorsehen der Zwischenlage 10 und des Metallschaum-Vormaterials 12.1 zwischen der ersten und zweiten Decklage 8, 9, und zwar derart, wie dies nach Fig. 3b zu erkennen ist:
   Die Zwischenlage 10 wird, gegebenenfalls mit ihrer eigenen Lot-Plattierschicht, an der Lot-Plattierschicht der ersten Decklage 8 angelegt, wodurch sich zwischen der Zwischenlage 10 und der ersten Decklage 8 Fluidkanäle 11 ausbilden. Sohin bilden die Zwischenlage 10, nämlich deren Sicken 10.1, und
   die erste Decklage 8 die Innenwand der Fluidkanäle 11 aus. Das Metallschaum-Vormaterial 12.1 befindet sich zwischen der Zwischenlage 10 und der zweiten Decklage 9. Gegebenenfalls wird ein Flussmittel zwischen den beiden Lot-Plattierschichten vorgesehen.
3. Stoffschlüssiges Verbinden zu einem einteiligen Gehäuseteil 7. Einerseits werden die erste Decklage 8 und die Zwischenlage 10 durch Löten, nämlich durch Hartlöten, unter Verwendung ihrer Lotplattierungen und andererseits die Zwischenlage 10 und die zweite Decklage 9 durch Aufschäumen des Metallschaum-Vormaterials 12.1 stoffschlüssig miteinander verbunden.

Beispielsweise kann hierzu die nach Fig. 3b dargestellte Anordnung der nach Fig. 3a bereitgestellten Teile 8, 9, 10, 12.1 in einen Ofen eingebracht werden. Löten und Aufschäumen erfolgen in einem Verfahrensschritt, in dem das Metallschaum-Vormaterial 12.1 beim Löten aufschäumt. Dies ergibt sich, indem sich das Schmelzintervall von Lot und Metallschaum-Vormaterial 12.1 bereichsweise überlappen, beispielsweise, indem der Gehäuseteil 7 auf 560°C im Ofen erwärmt wird. Erste Decklage 8 und Zwischenlage 10 sind über eine Lötverbindung 13 stoffschlüssig miteinander verbunden. Zwischenlage 10 und zweite Decklage 9 sind über den Metallschaum 12 stoffschlüssig miteinander verbunden - und zwar sind diese an den Metallschaum 12 angebunden. Dies schafft kostengünstig und schnell ein standfestes einteiliges Gehäuseteil 7 auf reproduzierbare Weise.

Im Allgemeinen wird erwähnt, dass das Aufschäumen des Metallschaum-Vormaterials unter Druck auf die erste und zweite Decklage 8, 9 erfolgen kann. Damit kann eine Formänderung des Gehäuseteils 7, bedingt durch ein Aufschäumen des Metallschaum-Vormaterials 12.1, vermieden werden.

Für die Metallbleche können aber auch andere Werkstoffe, nämlich Stahllegierungen, verwendet werden.
Nach einem zweiten Ausführungsbeispiel sind die Metallbleche der ersten Decklage 8, der zweiten Decklage 9 und der Zwischenlage 10 aus einem HSLA-Stahl, nämlich HSLA460. Als Lot 13.1 für die Lötverbindung 13 zwischen erster Decklage 8 und Zwischenlage 10 wird eine Zinnlegierung auf Sn-Cu-Basis, nämlich A653, verwendet. Als festes Metallschaum-Vormaterial 12.1 kann - wie vorstehend unter Punkt 1 erwähnt - kompaktiertes AlSi₁₀Mg mit TiH₂ in Streifenform dienen.
Das stoffschlüssige Verbinden der bereitgestellten Teile 8, 9, 10, 12.1 erfolgt nicht in einem Verfahrensschritt (einstufig), sondern mehrstufig. Zunächst wird das feste Metallschaum-Vormaterial 12.1, beispielsweise bei 580°C aufgeschäumt und damit eine stoffschlüssige Verbindung zwischen Zwischenlage 10 und zweiter Decklage 9 hergestellt. In einem nachfolgenden Schritt wird Lot 13.1 als Lotpaste A653, enthaltend Flussmittel, auf die Zwischenlage 10 aufgebracht und die erste Decklage 8 mit der Zwischenlage 10 unter Ausbildung einer Lotverbindung 13 verlötet, nämlich weichverlötet, beispielsweise bei 250 bis 300°C. Zwischen der Zwischenlage 10 und der ersten Decklage 8 bilden sich in diesem zweiten Ausführungsbeispiel Fluidkanäle 11 aus.

Nach einem dritten Ausführungsbeispiel wird als einzige Unterscheidung zum zweiten Ausführungsbeispiel ein Metallschaum-Vormaterial 12.1 verwendet, das aus einem Metallpulver mit einer Zinkbasis, nämlich Zink, und einem Treibmittel, nämlich TiH₂, gemischt und anschließend kompaktiert in Streifenform vorliegt. Dieses feste Metallschaum-Vormaterial 12.1 wird ebenso aufgeschäumt, beispielsweise bei 420°C, und damit eine stoffschlüssige Verbindung zwischen Zwischenlage 10 und zweiter Decklage 9 hergestellt.

Auch ist vorstellbar, ein Metallschaum-Vormaterial 12.1 bzw. einen Metallschaum 12 mit einer Zn-Al-Basis zu verwenden. Dies insbesondere, wenn verzinkte Metallbleche aus einer Stahllegierung, beispielsweise nach dem dritten Ausführungsbeispiel, verwendet werden. Der Metallschaum 12 kann so beim Aufschäumen mit den erfindungsgemäß verwendeten Zinklegierungen auflegieren, dabei den Schmelzpunkt erhöhen und zu einer zusätzlichen Stabilisierung des Schaumes und der Übergangszonen zwischen dem Metallschaum 12 und der ihn begrenzenden Zwischenlage 10 und zweiten Decklage 9 führen.

## Patentansprüche

1. Verfahren zur Herstellung eines, Fluidkanäle (11) aufweisenden Gehäuseteils (7), insbesondere Gehäusebodens (6) oder Gehäusedeckels, eines Batterieträgers (1) mit folgenden Schritten:
Bereitstellen einer ersten Decklage (8) aus wenigstens einem ersten Metallblech,
Bereitstellen einer zweiten Decklage (9) aus wenigstens einem zweiten Metallblech,
Bereitstellen einer, Sicken (10.1) aufweisenden Zwischenlage (10) aus wenigstens einem dritten Metallblech,
Bereitstellen eines, aus wenigstens einem Metallpulver und einem Treibmittel kompaktierten Metallschaum-Vormaterials (12.1),
Anlegen der Zwischenlage (10) an die erste Decklage (8), wodurch sich zwischen der Zwischenlage (10) und der ersten Decklage (8) Fluidkanäle (11) ausbilden,
Vorsehen des Metallschaum-Vormaterials (12.1) zwischen der Zwischenlage (10) und der zweiten Decklage (9) und
stoffschlüssiges Verbinden zu einem einteiligen Gehäuseteil (7), umfassend ein Aufschäumen des Metallschaum-Vormaterials (12.1).

2. Verfahren nach Anspruch 1, **dadurch gekennzeichnet, dass** das stoffschlüssige Verbinden zu einem einteiligen Gehäuseteil (7) ein Verlöten der erste Decklage (8) mit der Zwischenlage (10) umfasst.

3. Verfahren nach Anspruch 2, **dadurch gekennzeichnet, dass** die erste Decklage (8) und/oder die Zwischenlage (10) eine Lotschicht, insbesondere Lotplattierung, aufweist.

4. Verfahren nach Anspruch 2 oder 3, **dadurch gekennzeichnet, dass** das Metallschaum-Vormaterial (12.1) beim Löten aufschäumt.

5. Verfahren nach einem der Ansprüche 1 bis 4, **dadurch gekennzeichnet, dass** die Sicken (10.1), insbesondere Trapezsicken, in das Metallblech eingeprägt werden.

6. Verfahren nach einem der Ansprüche 1 bis 5, **dadurch gekennzeichnet, dass** das Metallschaum-Vormaterial (12.1) eine Blatt- oder Streifenform aufweist.

7. Verfahren nach einem der Ansprüche 1 bis 6, **dadurch gekennzeichnet, dass** das
erste und/oder dritte Metallblech eine Aluminiumlegierung, insbesondere auf Al-Mn-Basis oder Al-Mg-Si-Basis, beispielsweise eine EN AW-3572, EN AW-6060 oder EN AW-6063 Aluminiumlegierung, oder eine Stahllegierung, insbesondere HSLA-Stahl oder CP-Stahl, beispielsweise HSLA460 oder CP1000, aufweisen,
und/oder das
zweite Metallblech eine Aluminiumlegierung, insbesondere auf Al-Mg-Si-Basis oder Al-Mg-Basis, beispielsweise eine EN AW-6082 Aluminiumlegierung im Zustand T4 oder eine EN AW-5005 Aluminiumlegierung, oder eine Stahllegierung, insbesondere HSLA-Stahl oder CP-Stahl, beispielsweise HSLA460 oder CP1000, aufweist,
und/oder der
Metallschaum (12) eine Aluminiumbasis, insbesondere Al-Si-Basis, oder eine Zinkbasis, insbesondere Zn-Al-Basis, aufweist,
und/oder das
Lot (13.1) der Lötverbindung (13) eine Aluminiumlegierung, insbesondere auf Al-Si-Basis, beispielsweise eine EN AW-4343 oder EN AW-4433 Aluminiumlegierung, oder eine Zinnlegierung, insbesondere auf Sn-Cu-Basis oder Sn-Ag-Basis, beispielsweise A653 oder A644, aufweist.

8. Verfahren nach Anspruch 7, **dadurch gekennzeichnet, dass** die Lotschicht und das Metallschaum-Vormaterial (12.1) je eine Aluminiumlegierung aufweisen, deren Basis gleich ist, insbesondere eine Aluminiumlegierung mit Al-Si-Basis aufweisen.

## Claims

1. Method for producing a housing section (7), more particularly housing base (6) or housing cover, of a battery carrier (1), which housing section has fluid channels (11), comprising the following steps:
providing a first cover layer (8) of at least a first metal sheet,
providing a second cover layer (9) of at least one second metal sheet,
providing an intermediate layer (10) having beads (10.1) and made of at least a third metal sheet,
providing a metal foam pre-material (12.1) compacted from at least one metal powder and a blowing agent,
placing the intermediate layer (10) against the first cover layer (8), whereby fluid channels (11) are formed between the intermediate layer (10) and the first cover layer (8),
providing the metal foam pre-material (12.1) between the intermediate layer (10) and the second cover layer (9), and
material bonding to form an integral housing section (7), comprising foaming of the metal foam pre-material (12.1).

2. Method according to claim 1, **characterized in that** the material bonding to form an integral housing section (7) comprises soldering the first cover layer (8) to the intermediate layer (10).

3. Method according to claim 2, **characterized in that** the first cover layer (8) and/or the intermediate layer (10) has a solder layer, more particularly solder plating.

4. Method according to claim 2 or 3, **characterized in that** the metal foam pre-material (12.1) foams during soldering.

5. Method according to one of claims 1 to 4, **characterized in that** the beads (10.1), more particularly trapezoidal beads, are stamped into the metal sheet.

6. Method according to one of claims 1 to 5, **characterized in that** the metal foam pre-material (12.1) has a sheet or strip shape.

7. Method according to one of claims 1 to 6, **characterized in that** the first and/or third metal sheet comprise an aluminum alloy, more particularly Al-Mn-based or AI-Mg-Si-based, for example an EN AW-3572, EN AW-6060 or EN AW-6063 aluminum alloy, or a steel alloy, more particularly HSLA steel or CP steel, for example HSLA460 or CP1000,
and/or the
second metal sheet comprises an aluminum alloy, more particularly Al-Mg-Si-based or AI-Mg-based, for example an EN AW-6082 aluminum alloy in the T4 state or an EN AW-5005 aluminum alloy, or a steel alloy, more particularly HSLA steel or CP steel, for example HSLA460 or CP1000,
and/or the
metal foam (12) comprises an aluminum base, more particularly an Al-Si base, or a zinc base, more particularly a Zn-AI base
and/or the
solder (13.1) of the solder joint (13) comprises an aluminum alloy, more particularly Al-Si-based, for example an EN AW-4343 or EN AW-4433 aluminum alloy, or a tin alloy, more particularly Sn-Cu-based or Sn-Ag-based, for example A653 or A644.

8. Method according to claim 7, **characterized in that** the solder layer and the metal foam pre-material (12.1) each comprise an aluminum alloy whose base is the same, more particularly an aluminum alloy with an Al-Si base.

## Revendications

1. Procédé pour la fabrication d'une partie de boîtier (7) comportant des canaux de fluide (11), en particulier d'un fond de boîtier (6) ou d'un couvercle de boîtier d'un support de batterie (1), comprenant les étapes suivantes :
préparation d'une première couche de couverture (8) faite d'au moins une première tôle métallique,
préparation d'une deuxième couche de couverture (9) faite d'au moins une deuxième tôle métallique,
préparation d'une couche intermédiaire (10) présentant des moulures (10.1) et
faite d'au moins une troisième tôle métallique,
préparation d'une ébauche en mousse métallique (12.1) compactée à partir d'au moins une poudre métallique et d'un agent moussant,
pose de la couche intermédiaire (10) sur la première couche de couverture (8),
de sorte que les canaux de fluide (11) se forment entre la couche intermédiaire (10) et la première épaisseur de couverture (8),
disposition de l'ébauche en mousse métallique (12.1) entre la couche intermédiaire (10) et la deuxième couche de couverture (9) et
assemblage par solidarité de matière pour former une partie de boîtier (7) d'une pièce, comprenant un moussage de l'ébauche en mousse métallique (12.1).

2. Procédé selon la revendication 1, **caractérisé en ce que** l'assemblage par solidarité de matière pour former une partie de boîtier (7) d'une pièce comprend un brasage de la première couche de couverture (8) avec la couche intermédiaire (10).

3. Procédé selon la revendication 2, **caractérisé en ce que** la première couche de couverture (8) et/ou la couche intermédiaire (10) comportent une couche brasée, en particulier un placage par brasage.

4. Procédé selon la revendication 2 ou 3, **caractérisé en ce que** l'ébauche en mousse métallique (12.1) mousse lors du brasage.

5. Procédé selon l'une des revendications 1 à 4, **caractérisé en ce que** les moulures (10.1), en particulier des moulures trapézoïdales, sont embouties dans la tôle métallique.

6. Procédé selon l'une des revendications 1 à 5, **caractérisé en ce que** l'ébauche en mousse métallique (12.1) est en forme de feuille ou de bande.

7. Procédé selon l'une des revendications 1 à 6, **caractérisé en ce que** la première tôle métallique et/ou la troisième comprennent un alliage d'aluminium, en particulier à base d'Al-Mn ou d'Al-Mg-Si, par exemple un alliage d'aluminium EN AW-3572, EN AW-6060 ou EN AW-6063, ou un alliage d'acier, en particulier un acier HSLA ou un acier CP, par exemple HSLA460 ou CP1000,
et/ou
la deuxième tôle métallique comprend un alliage d'aluminium, en particulier à base d'Al-Mg ou d'Al-Mg-Si, par exemple un alliage d'aluminium EN AW-6082 dans l'état T4 ou un alliage d'aluminium EN AW-5005, ou un alliage d'acier, en particulier un acier HSLA ou un acier CP, par exemple HSLA460 ou CP1000,
et/ou
la mousse métallique (12) est à base d'aluminium, en particulier à base d'Al-Si, ou à base de zinc, en particulier à base de Zn-Al,
et/ou
la brasure (13.1) de l'assemblage brasé (13) comprend un alliage d'aluminium, en particulier à base d'Al-Si, par exemple un alliage d'aluminium EN AW-4343 ou EN AW-4433, ou un alliage d'étain, en particulier à base de Sn-Cu ou de Sn-Ag, par exemple A653 ou A644.

8. Procédé selon la revendication 7, **caractérisé en ce que** la couche brasée et l'ébauche en mousse métallique (12.1) comprennent chacun un alliage d'aluminium ayant la même base, en particulier un alliage d'aluminium à base d'Al-Si.
